# EUROPÄISCHE PATENTSCHRIFT

(11) **EP 1 675 756 B1**
(45) Veröffentlichungstag und Bekanntmachung des Hinweises auf die Patenterteilung: **14.03.2007**
(21) Anmeldenummer: 04790360.4
(22) Anmeldetag: 13.10.2004
(51) Int. Cl.: B60R 13/10, G09F 13/22

(54) **SCHILD**
PLATE
PLAQUE

(30) Priorität: 24.10.2003 DE 20316349 U
(43) Veröffentlichungstag der Anmeldung: 05.07.2006
(73) Patentinhaber: FER Fahrzeugelektrik GmbH, 99817 Eisenach (DE)
(72) Erfinder: GOTTHARDT, Frank, 37077 Göttingen (DE)
(74) Vertreter: Strasser, Wolfgang
(86) Internationale Anmeldenummer: PCT/EP2004/011488
(87) Internationale Veröffentlichungsnummer: WO 2005/042312

(56) Entgegenhaltungen:
- WO-A-20/04048155
- DE-A- 2 852 661
- DE-A- 10 160 376
- US-A- 6 142 643

## Beschreibung

Die Erfindung betrifft ein Schild, insbesondere ein Kraftfahrzeug-Kennzeichenschild gemäß dem Oberbegriff von Anspruch 1.

Aus dem Stand der Technik sind reflektierende Schilder, insbesondere Kraftfahrzeug-Kennzeichenschilder bekannt, deren Reflexionsvermögen darauf beruht, dass auf einen beispielsweise aus Aluminiumblech bestehenden Träger eine Reflexfolie aufgeklebt oder aufkaschiert ist. Dabei müssen Reflexfolien verwendet werden, deren Reflexionsvermögen innerhalb eines gesetzlich festgelegten Bereiches liegt, dessen Minimalwert nicht unter- und dessen Maximalwert nicht überschritten werden darf. Im Handel erhältliche Folien, die diesen Bedingungen genügen, umfassen eine häufig aus Aluminium bestehende Trägerschicht, die für Licht undurchlässig ist.

Versucht man nun ein Schild, insbesondere ein Kraftfahrzeug-Kennzeichenschild herzustellen, das dadurch selbstleuchtend ist, dass es auf einer seiner Flachseiten eine einen Elektrolumineszenz-Flachkondensator bildende Schichtenfolge aufweist, die unmittelbar auf dem Schild selbst aufgebaut ist, so kann nach dem Stand der Technik ein solches Schild nicht gleichzeitig reflektierend ausgebildet werden. Bringt man nämlich zunächst auf den Träger die Schichtenfolge des Flachkondensators auf, so kann er nicht mit den oben erwähnten Reflexfolien überdeckt werden, da deren Trägerschicht das von ihm abgegebene Licht nicht durchläßt.

Versucht man umgekehrt, eine flächendeckende Elektrolumineszenz-Flachkondensator-Anordnung auf die Oberseite einer auf den Schildträger aufgebrachten Reflexfolie aufzubringen, so werden deren Reflexionseigenschaften unwirksam, da zumindest einige der Flachkondensator-Schichten für Fremdlicht in beiden Richtungen undurchlässig sind.

Zwar sind im Handel auch transparente Reflexfolien verfügbar, doch besitzende diese ein Reflexionsvermögen, das wesentlich höher als der oben erwähnte, gesetzlich zulässigen Maximalwert ist.

In der älteren deutschen Patentanmeldung 102 55 377.7 ist ein Schild beschrieben, auf dessen einer Flachseite sowohl eine einen Elektrolumineszenz-Flachkondensator bildende Schichtenfolge als auch eine transparente Reflexfolie aufgebracht sind, von deren Rückseite prismatische Strukturen frei vorstehen, an deren Grenzflächen das von der Vorderseite her einfallende Licht durch Totalreflexion ursprünglich mit einem Reflexionsvermögen reflektiert wird, das höher als der gesetzlich zugelassene Maximalwert ist. Um diesen hohen Reflexionswert in den zulässigen Bereich abzusenken, ist die Reflexfolie mit Hilfe eines Klebers vollflächig oder bereichsweise befestigt, der in etwa den gleichen Brechungsindex wie die prismatische Strukturen der Reflexfolie aufweist und die zwischen den hervorstehenden prismatische Strukturen vorhandenen Freiräume zumindest partiell auffüllt. An all den Grenzflächen der prismatische Strukturen, die von diesem Kleber bedeckt sind, kann keine Totalreflexion eintreten. Dadurch, dass nicht alle Grenzflächen der prismatischen Strukturen mit dem Kleber in Berührung gebracht sind, bleibt nach wie vor ein - allerdings vermindertes - Reflexionsvermögen erhalten. Durch das Ausmaß, in dem die prismatischen Strukturen durch den Kleber abgedeckt sind, ist das letzendlich erzielte Reflexionsvermögen bei der Herstellung eines solchen Schildes innerhalb weiter Grenzen und insbesondere so veränderbar, dass die gesetzlichen Normen erfüllt werden.

Ein gattungsgemäßes Schild ist aus US 6 142 643 A bekannt.

Es besteht aber die weitere, durch das eben erläuterte Schild noch nicht erfüllte, gesetzliche Anforderung, daß die Reflexfolie, die nach dem Prägen des Schildes auf ihrer Außenseite die Kennzeichen-Beschriftung trägt, mit der darunter liegenden Schicht so fest verbunden sein muß, dass ein zerstörungsfreies Ablösen nicht möglich ist.

Somit liegt der Erfindung die Aufgabe zugrunde, ein Schild zu schaffen, das diese Anforderung erfüllt, ohne dass die positiven Eigenschaften des oben beschriebenen Schildes verschlechtert werden oder gar verloren gehen.

Zur Lösung dieser Aufgabe sieht die Erfindung die im Anspruch 1 zusammengefaßten Merkmale vor.

Dadurch, daß gemäß der Erfindung ein Kleber, vorzugsweise auf Polyurethan-Basis verwendet wird, dessen Haftung sowohl an der darunterliegenden Schicht als auch an der durch ihn befestigten Reflexfolie Kräfte vermittelt, die größer sind als die Kräfte, die die Integrität bzw. den strukturellen Zusammenhalt der Reflexfolie bewirken wird es unmöglich, diese zerstörungsfrei von der darunterliegenden Schicht abzulösen.

Besonders vorteilhaft an dieser Anordnung ist, daß die Polyurethan-Kleberschich mit einer solchen Schichtdicke ausgebildet sein kann, daß sie einen sehr guten Schutz für die unter ihr liegende Elektrolumineszenz-Flachkondensator-Anordnung insbesondere gegen-Steinschlag und ähnliche mechanische Belastungen bietet. Somit ist es nur noch erforderlich, vor dem Aufbringen der Klebstoffschicht den Elektrolumineszenz-Flachkondensator mit einer dünnen Schicht beispielsweise aus Acryllack abzudecken, um ihn gegen das Eindringen von Feuchtigkeit zu schützen.

Eine besonders gute Haftung der Klebstoffschicht an der darunter bzw. darüber liegenden Nachbarschicht läßt sich dadurch erzielen, daß jeweils eine Haftvermittler-Schicht eingefügt ist, wobei unterschiedlichste Haftvermittler zur Verfügung stehen, die eine optimale Anpassung an die jeweilige Schichten-Paarung ermöglichen.

Diese und weitere Merkmale und Vorteile eines erfindungsgemäßen Schildes sind in den Unteransprüchen niedergelegt.

Die Erfindung wird im folgenden anhand von Ausführungsbeispielen unter Bezugnahme auf die Zeichnung beschrieben; in dieser zeigen:

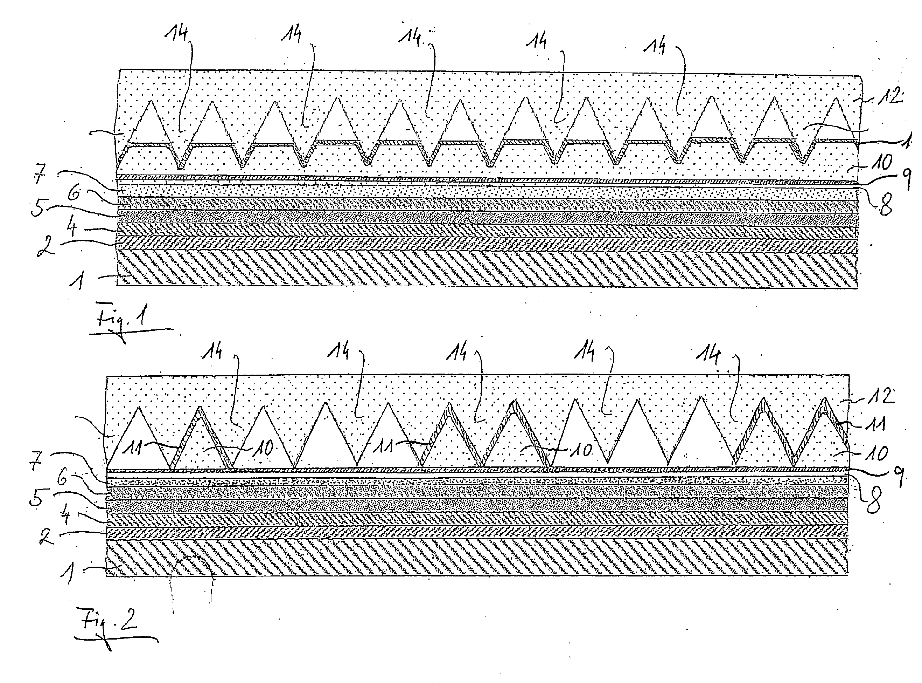

- Figur 1: einen schematischen Querschnitt durch eine erste Ausführungsform eines erfindungsgemäßen Schildes, bei der der Reflexionsgrad einer transparenten Reflexfolie durch ein partielles Eintauchen der auf der Rückseite vorstehenden prismatischen Strukturen in eine den gleichen Brechungsindex aufweisende Klebstoffschicht vermindert ist, und
- Figur 2: einen schematischen Querschnitt durch eine zweite Ausführungsform eines erfindungsgemäßen Schildes, bei der der Reflexionsgrad einer transparenten Reflexfolie durch das vollständige Eintauchen der auf der Rückseite vorstehenden prismatischen Strukturen in eine auf die Fläche des Schildes nur partiell aufgebrachte, den gleichen Brechungsindex aufweisende Klebstoffschicht vermindert ist.

Bei allen dargestellten Ausführungsformen sind die Dicken der einzelnen Schichten nicht maßstabsgetreu wiedergegeben und teilweise der Deutlichkeit halber stark vergrößert dargestellt. Auch die von der Rückseite der Reflexfolie abstehenden, bzw. in die Reflexfolie eingebetteten prismatischen Strukturen, an deren Grenzflächen die Reflexion des von vorne, d. h. in den Figuren von oben einfallenden Lichts erfolgt, sind stark vereinfacht als nach hinten ragende Prismen mit dreieckigem bzw. trapezförmigem Querschnitt wiedergegeben.

Im unteren Bereich besitzen alle dargestellten Ausführungsformen den gleichen Schichtaufbau. Die in beiden Figuren gleichen Schichten sind mit den gleichen Bezugszeichen bezeichnet.

Die Basis eines jeden Schildes bildet ein verformbarer Träger 1, der aus einem plastisch verformbaren Kunststoffmaterial oder aus Metall, beispielsweise Aluminium, bestehen kann. In letzterem Fall ist der Träger 1 vorzugsweise durch eine Isolationsschicht 2 vollständig abgedeckt, die auf ihrer Oberseite eine elektrisch gut leitende Metallbeschichtung, beispielsweise aus Kupfer trägt, aus der verschiedene leitende Bereiche herausgeätzt sind, von denen in den Figuren nur der die Basiselektrode 4 des im folgenden beschriebenen Elektrolumineszenz-Flachkondensators bildende Bereich im Querschnitt wiedergegeben ist. Sollen auf dem Schild mehrere nebeneinander liegende, getrennt ansteuerbare Flachkondensatoren ausgebildet werden, so können aus der Metallbeschichtung auch mehrere voneinander elektrisch isolierte Basiselektroden mit ihren jeweiligen Ansteuerleitungen herausgeätzt sein. Weiterhin ist aus der Metallbeschichtung vorteilhafterweise eine (nicht dargestellte) Einspeisleitung für die im folgenden noch genauer beschriebene transparente Deckelektrode des oder der Flachkondensatoren so herausgeätzt, dass sie von der oder den Basiselektroden und deren Ansteuerleitungen elektrisch isoliert ist.

Über der Metallbeschichtung befindet sich eine die ganze Fläche der Basiselektrode 4 bedeckende Isolationsschicht 5, die vorzugsweise mit einem hellen Pigment eingefärbt ist, um das von der darüber liegenden Pigmentschicht 6 beim Betrieb des Flachkondensators nach hinten, d. h. in den Figuren nach unten abgegebene Licht möglichst vollständig nach vorne bzw. oben abzustrahlen. Über der Pigmentschicht befindet sich eine transparente, äußerst dünne, elektrisch aber gut leitfähige Deckelektrode 7, die in wenigstens einem, in den Figuren nicht dargestellten Randbereich, in welchem die Isolationsschicht 5 und die Pigmentschicht 6 weggelassen sind, mit der aus der Metallbeschichtung herausgearbeiteten Einspeisleitung in elektrisch gut leitendem Kontakt steht, so dass über diese Einspeisleitung an die Deckelektrode 7 bezüglich der Basiselektrode 4 eine Wechselspannung angelegt werden kann, durch welche die in der Pigmentschicht 6 enthaltenen, dotierten Pigmente in bekannter Weise zu einem als Elektrolumineszenz bezeichneten Leuchten angeregt werden.

Die bisher beschriebenen Strukturen können in der Weise hergestellt werden, dass eine die Isolationsschicht 2 bildende, auf ihrer Unterseite mit einer (nicht dargestellten) Klebstoffschicht versehene und auf ihrer Oberseite die Metallbeschichtung tragende, handelsübliche Folie auf den Träger 1 auflaminiert wird. Das Herausätzen der verschiedenen, voneinander elektrisch getrennten Leitungs- und Elektrodenbereiche kann je nach Bedarf vor oder nach diesem Aufbringen der Kunststofffolie auf den Träger 1 erfolgen. Die weiteren Schichten 4 bis 7 des Flachkondensators können durch bekannte Beschichtungsverfahren (Spritzen, Siebdruck, Dickschicht- oder andere Beschichtungsverfahren) aufgetragen werden.

Über der transparenten Deckelektrode 7 befindet sich eine dünne Acryllackschicht 8, die den darunter liegenden EL-Kondensator-Schichtaufbau gegen das Eindringen von Feuchtigkeit und andere nicht mechanische Umwelteinflüsse schützt.

Wesentlich ist, daß alle diese Schichten miteinander und mit dem Träger so fest verbunden sind, daß sie nicht zerstörungsfrei voneinander oder vom Träger gelöst werden können.

Bei dem in Figur 1 gezeigten Ausführungsbeispiel befindet sich über der Acryllackschicht 8 eine über die ganze Flachseite des Schildes aufgetragene Haftvermittler-Schicht 9, die die erforderliche feste Verbindung zu der ebenfalls ganzflächig aufgetragenen Polyurethan-Kleberschicht 10 herstellt, die ihrerseits von einer Schicht 11 aus einem zweiten Haftvermittler bedeckt ist, der für die erforderliche feste Verbindung zu der der darüber liegenden Reflexfolie 12 sorgt.

Da die Stärke der Haftung zwischen dem Polyurethan-Kleber und den beiden durch ihn miteinander zu verbindenden Schichten 8 und 12 vom Material der letzteren abhängt und dieses unterschiedlich ist, werden vorzugsweise zwei verschiedene Haftvermittler 9 und 11 eingesetzt um für jeweils maximale Haftungsfestigkeit zu sorgen. Die konkrete Auswahl der Haftvermittler kann durch den Fachmann, soweit sie sich nicht ohnehein von den entsprechenden Herstellern herausgegebenen Listen entnehmen läßt, durch Versuche ermittelt werden.

Wesentlich ist, dass zumindest der verwendete Polyurethan-Kleber im ausgehärteten Endzustand einen Brechungsindex besitzt, der im wesentlichen gleich dem Brechungsindex der von der Rückseite der Reflexfolie 12 abstehenden prismatischen Strukturen 14 ist. Beim Aufbringen der Reflexfolie 14 ist diese mit einem vorgegebenen Druck so angepreßt worden, dass diese prismatischen Strukturen 14 mit einer gewünschten Tiefe in die Kleberschicht 10 eindringen. Für alle Lichtstrahlen, die von vorne, d. h. in den Figuren von oben auf die transparente Reflexfolie 12 auftreffen und sich durch sie hindurch in die prismatischen Strukturen 14 hinein ausbreiten, findet an den Oberflächenteilen der prismatischen Strukturen 14, die von der Kleberschicht 10 bedeckt sind, wegen der gleichen bzw. nahezu gleichen Brechungsindizes keine oder nur noch eine stark verminderte Totalreflexion statt. An den von Klebstoff nicht bedeckten Oberflächenteilen der prismatischen Strukturen 14 bleibt die Totalreflexion jedoch unvermindert erhalten. Im Mittel ergibt sich somit ein gegenüber ihrem nicht verklebten Zustand vermindertes Reflexionsvermögen der Reflexfolie 12 . Das Ausmaß der Verminderung des Reflexionsvermögens hängt von der Eintauchtiefe der prismatischen Strukturen 14 in die Klebstoffschicht 10 ab, die ihrerseits durch den beim Aufbringen der Reflexfolie 12 ausgeübten Druck und/oder die zum Zeitpunkt des Aufbringens herrschende Viskosität des Klebers gesteuert werden kann. Somit ist es möglich, eine für das Licht des oder der Flachkondensatoren weitestgehend transparente Reflexfolie 12 zu verwenden, die vor ihrer Verarbeitung ein sehr hohes, oberhalb des gesetzlich zulässigen Maximalwertes liegendes Reflexionsvermögen besitzt, und dieses Reflexionsvermögen bei der Herstellung des Schildes in gezielter Weise so zu vermindern, dass es in den gesetzlich zulässigen Bereich zu liegen kommt.

Das in Figur 2 wiedergegebene Ausführungsbeispiel unterscheidet sich von dem aus Figur 1 nur dadurch, dass die Kleberschicht 10 und die obere Haftvermittlerschicht 11 nicht ganzflächig sondern nur partiell auf die Oberseite der Acryllackschicht 8 aufgetragen sind, und dass die an der Rückseite der Reflexfolie 12 abstehenden prismatischen Strukturen 14 in den Flächenbereichen, in denen eine Kleberschicht 10 vorhanden ist, in diese vollständig eintauchen, so dass die zwischen ihnen vorhandenen Freiräume gänzlich mit Kleber ausgefüllt sind. In diesen Bereichen findet somit keinerlei Totalreflexion an den vom Kleber bedeckten Flächen der prismatischen Strukturen 14 statt. In den Flächenbereichen, in denen keine Kleberschicht 10 vorhanden ist, behalten die prismatischen Strukturen 14 dagegen ihre Fähigkeit zur Totalreflexion in vollem Umfang. Somit kann durch eine geeignete Wahl sowohl der Größe als auch der Verteilung der mit einer Kleberschicht 10 bedeckten und der dazwischen liegenden von Kleber freien Flächenbereiche ein mittleres Reflexionsvermögen der Reflexfolie 12 erzielt werden, das innerhalb des gesetzlich zulässigen Bereiches liegt, obwohl das Reflexionsvermögen der nicht verarbeiteten Reflexfolie 12 den maximal zulässigen Grenzwert übersteigt.

Sowohl bei dem in Figur 1 als auch bei dem in Figur 2 wiedergegebenen Ausführungsbeispiel können die Haftvermittlerschichen 9 und 11 sowie die Kleberschicht 10 auf unterschiedliche Weise aufgebracht werden.

Eine Möglichkeit besteht in der Verwendung eines Siebdruckverfahrens, mit dessen Hilfe sowohl der ganzflächige Auftrag gemäß Figur 1 als auch der auf einzelne Flächenbereiche begrenzte Auftrag mit dazwischenliegenden klebstofffreien Flächenbereichen in wirtschaftlicher Weise schnell und zuverlässig durchgeführt werden kann. Auch eine Bandlackierung oder ein Sprühverfahren sind möglich.

## Patentansprüche

1. Schild, insbesondere Kraftfahrzeug-Kennzeichenschild, bei dem auf einen Träger (1) eine einen Elektrolumineszenz-Flachkondensator (4, 5, 6, 7) bildende Schichtenfolge und über dieser eine für das Licht des Elektrolumineszenz-Flachkondensators (4, 5, 6, 7) durchlässige Klebstoffschicht (10) aufgebracht ist, vermittels derer eine für das Licht des Elektrolumineszenz-Flachkondensators (4, 5, 6, 7) ebenfalls durchlässige Reflexfolie (12) befestigt ist, deren ursprünglicher Reflexionswert über einem vorgebbaren Maximalwert liegt und deren Reflexionseigenschaften darauf beruhen, dass sie auf ihrer Rückseite nach hinten abstehende prismatische Strukturen (14) aufweist, an deren Grenzflächen das von der Vorderseite her einfallende Licht durch Totalreflexion reflektiert wird, **dadurch gekennzeichnet, dass** die Klebstoffschicht (10) in etwa den gleichen optischen Brechungsindex wie die nach hinten abstehenden prismatischen Strukturen (14) der Reflexfolie (12) aufweist und die Zwischenräume zwischen den prismatischen Strukturen (14) so weit partiell auffüllt, dass durch die **dadurch** bewirkte Verminderung der total reflektierenden Oberflächen der Reflexionswert des fertigen Schildes unter dem vorgebbaren Maximalwert liegt, und dass die durch die Klebstoffschicht (10) vermittelten Haftkräfte größer sind, als die die Integrität der Reflexfolie (12) aufrecht erhaltenden Kräfte.

2. Schild nach Anspruch 1, **dadurch gekennzeichnet, daß** die Klebstoffschicht (10) einen Kleber auf Polyurethan-Basis umfaßt.

3. Schild nach Anspruch 1 oder 2, **dadurch gekennzeichnet, daß** zwischen der Klebstoffschicht (10) und ihren darunter beziehungsweise darüber liegenden Nachbarschichten jeweils eine Haftvermittler-Schicht (9; 11) vorgesehen ist.

4. Schild nach Anspruch 3, **dadurch gekennzeichnet, daß** die beiden Haftvermittler-Schichten (9; 11) aus unterschiedlichen Haftvermittlern bestehen.

5. Schild nach einem der vorhergehenden Ansprüche, **dadurch gekennzeichnet, daß** die Klebstoffschicht (10) einen 1-komponentigen Kleber umfaßt.

6. Schild nach einem der Ansprüche 1 bis 4, **dadurch gekennzeichnet, daß** die Klebstoffschicht (10) einen mehr-komponentigen Kleber umfaßt.

7. Schild nach einem der Ansprüche 1 bis 4, **dadurch gekennzeichnet, daß** die Klebstoffschicht (10) einen katalytisch härtenden Kleber umfaßt.

8. Schild nach einem der Ansprüche 1 bis 4, **dadurch gekennzeichnet, daß** die Klebstoffschicht (10) einen durch Bestrahlung mit UV-Licht härtenden Kleber

9. Schild nach Anspruch 1, **dadurch gekennzeichnet, dass** die Klebstoffschicht (10) die Zwischenräume zwischen den prismatischen Strukturen (14) höhenmäßig

10. Schild nach einem der vorhergehenden Ansprüche, **dadurch gekennzeichnet. dass** die Klebstoffschicht (10) die Zwischenräume zwischen den prismatischen Strukturen (14) flächenmäßig partiell auffüllt.

11. Schild nach einem der vorhergehenden Ansprüche, **dadurch gekennzeichnet, dass** die Klebstoffschicht (10) die Zwischenräume zwischen den prismatischen Strukturen (14) in rasterartig nebeneinander liegenden Flächenbereichen in unterschiedlichen Höhen auffüllt, so dass der flächenmäßig gemittelte Reflexionswert des Schildes unter dem vorgebbaren Maximalwert liegt.

12. Schild nach Anspruch 11, **dadurch gekennzeichnet, dass** die Klebstoffschicht (10) in ersten Flächenbereichen die Zwischenräume zwischen den prismatischen Strukturen (14) höhenmäßig vollständig auffüllt, während in dazwischen liegenden zweiten Flächenbereichen keinerlei Auffüllung der Zwischenräume durch die Klebstoffschicht erfolgt.

## Claims

1. A plate, in particular a motor vehicle licence plate, in which disposed on a carrier (1) is a layer sequence forming an electroluminescence flat capacitor (4, 5, 6, 7) and over said layer sequence is an adhesive layer (10) which is translucent for the light of the electroluminescence flat capacitor (4, 5, 6, 7) and by means of which a reflection film (12) which is also translucent for the light of the electroluminescence flat capacitor (4, 5, 6, 7) is fixed, the original reflection value of the reflection film being above a predeterminable maximum value and the reflection properties thereof being based on its having prismatic structures (14) which project rearwardly on its rear side and at the interfaces of which the light incident from the front side is reflected by total reflection, **characterised in that** the adhesive layer (10) is of approximately the same optical refractive index as the rearward projecting prismatic structures (14) of the reflection film (12) and partially fills the intermediate spaces between the prismatic structures (14) to such an extent that the reduction caused thereby in the totally reflecting surfaces makes the reflection value of the finished plate below the predeterminable maximum value, and that the adhesive forces produced by the adhesive layer (10) are greater than the forces maintaining the integrity of the reflection film (12).

2. A plate according to claim 1 **characterised in that** the adhesive layer (10) is a polyurethane-based adhesive.

3. A plate according to claim 1 or claim 2 **characterised in that** a respective bonding agent layer (9; 11) is provided between the adhesive layer (10) and its adjacent layers disposed thereunder or thereabove respectively.

4. A plate according to claim 3 **characterised in that** the two bonding agent layers (9; 11) comprise different bonding agents.

5. A plate according to one of the preceding claims **characterised in that** the adhesive layer (10) includes a one-component adhesive.

6. A plate according to one of claims 1 to 4 **characterised in that** the adhesive layer (10) includes a multi-component adhesive.

7. A plate according to one of claims 1 to 4 **characterised in that** the adhesive layer (10) includes a catalytically hardening adhesive.

8. A plate according to one of claims 1 to 4 **characterised in that** the adhesive layer (10) includes an adhesive which hardens by irradiation with UV light.

9. A plate according to claim 1 **characterised in that** the adhesive layer (10) partially fills the intermediate spaces between the prismatic structures (14) in respect of height.

10. A plate according to one of the preceding claims **characterised in that** the adhesive layer (10) partially fills the intermediate spaces between the prismatic structures (14) in respect of area.

11. A plate according to one of the preceding claims **characterised in that** the adhesive layer (10) fills the intermediate spaces between the prismatic structures (14) in surface regions which are disposed in mutually juxtaposed grid-like relationship to different heights so that the reflection value of the plate which is averaged in respect of surface area is below the predeterminable maximum value.

12. A plate according to claim 11 **characterised in that** the adhesive layer (10) completely fills the intermediate spaces between the prismatic structures (14) in respect of height in first surface regions while in second surface regions therebetween there is no filling of the intermediate spaces by the adhesive layer.

## Revendications

1. Plaqué, en particulier plaque d'immatriculation de véhicule, où une série de couches formant un condensateur plat à électroluminescence (4, 5, 6, 7) est appliquée sur un support (1) et, sur celle-ci, est appliquée une couche de colle (10) transparente à la lumière du condensateur plat à électroluminescence (4, 5, 6, 7), au moyen de laquelle un film réflecteur (12) également transparent à la lumière du condensateur plat à électroluminescence (4, 5, 6, 7) est fixé, dont la valeur de réflexion initiale est supérieure à une valeur maximale définissable et dont les propriétés réflexives découlent de ce qu'il présente sur sa face arrière des structures prismatiques (14) en saillie vers l'arrière, sur les surfaces de contact desquelles la lumière incidente depuis la face avant est réfléchie par réflexion totale, **caractérisée en ce que** la couche de colle (10) présente sensiblement le même indice de réfraction optique que les structures prismatiques (14) en saillie vers l'arrière du film réflecteur (12), et comble partiellement les espaces entre les structures prismatiques (14), de manière à rendre la valeur de réflexion de la plaque finie inférieure à la valeur maximale définissable par la réduction ainsi réalisée des surfaces à réflexion totale, et **en ce que** les forces d'adhérence exercées par la couche de colle (10) sont supérieures aux forces de maintien de l'intégrité du film réflecteur (12).

2. Plaque selon la revendication 1, **caractérisée en ce que** la couche de colle (10) comprend une colle à base de polyuréthane.

3. Plaque selon la revendication 1 ou 2, **caractérisée en ce qu'**une couche d'accrochage (9 ; 11) est prévue entre la couche de colle (10) et chacune de ses couches adjacentes, inférieure et supérieure à elle.

4. Plaque selon la revendication 3, **caractérisée en ce que** les deux couches d'accrochage (9 ; 11) se composent d'agents d'accrochage différents.

5. Plaque selon l'une des revendications précédentes, **caractérisée en ce que** la couche de colle (10) comprend une colle à 1 composant.

6. Plaque selon l'une des revendications 1 à 4, **caractérisée en ce que** la couche de colle (10) comprend une colle à plusieurs composants.

7. Plaque selon l'une des revendications 1 à 4, **caractérisée en ce que** la couche de colle (10) comprend une colle à durcissement catalytique.

8. Plaque selon l'une des revendications 1 à 4, **caractérisée en ce que** la couche de colle (10) comprend une colle durcissable par exposition au rayonnement UV.

9. Plaque selon la revendication 1, **caractérisée en ce que** la couche de colle (10) comble partiellement en hauteur les espaces entre les structures prismatiques (14).

10. Plaque selon l'une des revendications précédentes, **caractérisée en ce que** la couche de colle (10) comble partiellement en surface les espaces entre les structures prismatiques (14).

11. Plaque selon l'une des revendications précédentes, **caractérisée en ce que** la couche de colle (10) comble les espaces entre les structures prismatiques (14) sur des hauteurs différentes dans des zones de surface disposées en trame côte à côte, de manière à rendre la valeur moyenne de réflexion par rapport à la surface de la plaque inférieure à la valeur maximale définissable.

12. Plaque selon la revendication 11, **caractérisée en ce que** la couche de colle (10) comble entièrement en hauteur les espaces entre les structures prismatiques (14) dans de premières zones de surface, tandis qu'aucun espace n'est comblé par la couche de colle dans de secondes zones de surfaces intercalaires.
